# EUROPEAN PATENT SPECIFICATION

(11) **EP 3 468 757 B1**
(45) Date of publication and mention of the grant of the patent: **20.01.2021**
(21) Application number: 16751336.5
(22) Date of filing: 10.06.2016
(51) Int. Cl.: B28B 11/08, B24C 1/04, B44C 1/22, C04B 41/91, C04B 41/00, C04B 41/53

(54) **PRODUCTION METHOD OF A STRUCTURED CERAMIC TILE**
VERFAHREN ZUR HERSTELLUNG VON STRUKTURIERTEN KERAMIKFLIESEN
PROCÉDÉ DE PRODUCTION DE CARREAUX CÉRAMIQUES STRUCTURÉS

(43) Date of publication of application: 17.04.2019
(73) Proprietor: Manicardi, Massimo, 41049 Sassuolo (MO) (IT)
(72) Inventor: Manicardi, Massimo, 41049 Sassuolo (MO) (IT)
(74) Representative: Brunacci, Marco
(86) International application number: PCT/IB2016/053439
(87) International publication number: WO 2017/212320

(56) References cited:
- EP-A1- 2 025 485
- DD-A1- 229 859
- DE-A1- 2 838 916
- GB-A- 1 604 635
- GB-A- 2 063 849

## Description

### FIELD OF THE INVENTION

The present invention relates to the technical sector of ceramic tiles. In detail, the invention relates to a production method of structured ceramic tiles.

### DESCRIPTION OF THE PRIOR ART

As is known in the sector, for structured ceramic tiles (also known as ceramic tiles having a structured surface or "embossed tiles") are understood to be those tiles that have an upper surface thereof (i.e. the surface that is in view once the tile has been laid) with recesses and/or ripples with the aim of obtaining a determined aesthetic effect.

Structured ceramic tiles are formed starting from a mixture of clays, sands and other materials which are worked following different steps along the relative production line.

In detail, following preparation of the mixture, the first operation is forming the tile, which is done by pressing.

In practice, the prepared mixture is arranged inside a matrix and is then compressed by a counter-matrix (also known as a punch or bottom die) which acts vertically on the matrix: thus a compacting of the mixture is obtained which gives rise to the raw tile. In particular, the counter-matrix is able to give a determined structure to the upper surface of the tile. For this purpose, the counter-matrix comprises a surface to which a cladding is applied made of a polymeric material (generally resin) that is appropriately modelled so as to reproduce the desired rippling on the tiles.

Following the forming step the drying operation takes place, during which the raw tile is deprived of water in a controlled way, in order to guarantee the integrity of the tile and the relative dimensional regularity.

There follows at least a step of firing the tile in a kiln, possibly preceded by a glazing step, according to the type of tile to be obtained.

The above-described known-type method includes however some drawbacks.

In fact, the illustrated method necessarily includes having, for each tile having a different structure, a corresponding counter-matrix. This fact constitutes a direct cost due to the numerous nature of the counter-matrices and the maintenance/replacement operations thereof, as well as an indirect cost for managing the counter-matrices in stores.

Further, the fact that for each series of tiles having a different structure it is necessary to replace the counter-matrix leads to considerable down times in the production line.

Apart from this the above-described method has poor flexibility: tiles having "special" workings must necessarily be realised out-of-line.

Other kinds of production methods are disclosed in the patent documents GB 1604635, which discloses a production method of a structured ceramic tile in accordance with the pre-amble of claim 1, EP 2025485, DD 229859.

### SUMMARY OF THE INVENTION

An aim of the present invention is to obviate the above-mentioned drawbacks.

The aim is attained with a production method of structured ceramic tiles according to independent claim 1.

The invention advantageously enables effectively obviating the drawbacks in the prior art, as it enables elimination of the need to use a counter-matrix that is different for each tile to be obtained having a different structure (i.e. for each tile which has reliefs/ripples that are different).

This consequently translates into a considerable reduction in costs due both to the reduction in numbers of counter-matrices required with respect to the prior art, and to fewer maintenance operations on the counter-matrices.

Further, down times of the line are also eliminated, necessary in the prior art for replacing the counter-matrices for each tile with a different structure to be obtained. Therefore overall productivity and line flexibility are increased.

Lastly, the present invention guarantees a high degree of flexibility, as even "special" tiles (i.e. with non-standard working) can be realised in-line.

### DESCRIPTION OF THE PREFERRED EMBODIMENTS

Specific embodiments of the invention will be more fully highlighted in the following description, in which further advantages thereof will also be described.

The invention relates to a production method of a structured ceramic tile, comprising, in succession, steps of:
- carrying out forming of an unfired tile starting from a suitable mixture (which could comprise clays, sands and other materials);
- carrying out drying of the formed unfired tile;
- carrying out firing of the dried tile;

The method further comprises, between the step of forming the tile and the step of firing the tile, steps of:
- applying a covering on a surface of the tile so that at least a protection region of the surface is defined, covered by the covering and inaccessible from outside, and at least a working region of the surface is defined, accessible from outside (and therefore not covered by the cover); and thereafter
- dispensing, on the surface of the tile, fragments of an abrasive material, so as to abrade the working region; and thereafter
- removing the covering from the surface of the tile.

Clearly the surface of the tile on which the abrasive material is dispensed is the upper surface of the tile, i.e. the surface which remains "in view" once the tile has been laid. In fact, a structured tile has a relative upper surface with recesses and/or ripples with the purpose of obtaining a determined aesthetic effect.

As the working of the surface of the tile is done following forming, for this last operation it is possible to use a counter-matrix having a flat pressing surface. In the prior art the forming of a structured tile, the tile was formed by pressing the mixture using a counter-matrix having a pressing surface provided with ripples (therefore not flat) able to give the upper surface of the tile the specific requested working thereof. The invention therefore enables using standard counter-matrices with a flat pressing surface (for example made of metal), less expensive and in a decidedly smaller number than those of the prior art, as already mentioned in the foregoing. Further, the fact of using counter-matrices with relative flat pressing surfaces enables optimising the squaring and calibrating of the tile obtained, with respect to the use of known counter-matrices. The forming of the tile in this way is in fact more controlled.

Further, the fact of realising a structured tile by dispensing abrasive material thereon before firing enables maintaining the technical characteristics of the tile unaltered (differently for example to the use of chemical compounds and/or subsequent workings of the firing step).

The steps of applying a covering on a surface of the tile, of dispensing fragments of abrasive material on the surface of the tile, of removing the covering from the surface of the tile, are preferably carried out between the step of drying the tile and the step of firing the tile. Alternatively the above-mentioned steps can be carried out between the step of forming the tile and the step of drying the tile.

In accordance with the invention, the step of applying at least a covering on the surface of the tile consists of a step of applying a layer of adhesive or wax so as to define the working region.

For example, the glue is a vinyl glue. Alternatively, not according to the present invention, a layer of any material can be used that is able to adhere to the surface of the tile and can subsequently be easily removed.

For example, the glue or wax can be dispensed on the surface of the tile by corresponding nozzles of an appropriate automatic machine, connected to a software program enabling the machine to dispense the material in a predetermined manner, in various profiles.

In this case the removal of the covering can be done by rotating brushes which are part of an automatic machine of the production line.

In a further embodiment not according to the invention, the step of applying at least a covering on the surface of the tile comprises a step of positioning, on the surface of the tile, at least a sheet of material having a profile that is such as to define the working region. For example, the sheet can be advantageously cut so as to define a plurality of openings to which the working regions of the surface of the tile to be abraded correspond. The sheet therefore constitutes a sort of template.

The sheet can comprise (or can be made of) magnetic material (for example a magnetic metal). Alternatively the sheet can comprise nonmagnetic material (for example polymeric material) suitable for this function (for example stainless steel).

In a variant embodiment, the step of dispensing fragments of abrasive material on the surface of the tile comprises a step of dispensing ceramic fragments (for example vitrified stoneware). In this case, therefore, the step of dispensing the abrasive material consists of a step of sanding the surface of the raw tile. The fact of using ceramic fragments is advantageous as it enables using production waste of the ceramic line itself (therefore material already available, reducing costs).

In a further example, the step of dispensing fragments of abrasive material on the surface of the tile comprises a step of dispensing fragments of dry ice. The use of dry ice is advantageous since, by dissolving, it does not give rise to deposits of material, nor does it cause undesired corrosion in the workplace environment (for example to machinery and apparatus used for the abrasion).

Alternatively the step of dispensing fragments of abrasive material on the surface of the tile can comprise a step of dispensing fragments of vitreous material or fragments of aluminium oxide or alumina.

The method described previously, further comprising, following the step of removing the covering from the surface of the tile, a step of dispensing an air jet on the surface of the tile in order to remove any residues of fragments of abrasive material from the surface of the tile.

Obviously a step of glazing/decoration before the firing step can be included, and/or possible further firing steps, according to the tile that is to be obtained.

The present invention further enables having a surface working of the tile that is more precise than in the prior art, i.e. it enables obtaining varied recesses/ripples, even of a few millimetres' dimension, in the working region.

The present invention advantageously enables also obtaining special workings such as ceramic tiles known as "fake mosaic" which in the prior art were made by cutting into a smooth tile following the firing operation.

It is intended that the above has been described by way of non-limiting example, and any eventual constructional variants are understood to fall within the scope of protection of the present invention.

## Claims

1. A production method of a structured ceramic tile, comprising, in succession, steps of:
- carrying out forming of an unfired tile starting from a suitable mixture;
- carrying out drying of the formed unfired tile;
- carrying out firing of the dried tile;
comprising, between the step of forming the tile and the step of firing the tile, steps of:
- applying a covering on a surface of the tile so that at least a protection region of the surface is defined, covered by the covering and inaccessible from outside, and at least a working region of the surface is defined, accessible from outside; and thereafter
- dispensing, on the surface of the tile, fragments of an abrasive material, so as to abrade the working region; and thereafter
- removing the covering from the surface of the tile;
**characterised in that**:
the step of applying at least a covering on the surface of the tile consists of applying a layer of adhesive or wax on the surface of the tile so that the layer of adhesive or wax adheres to the surface and can subsequently be removed, to define the protection region and the working region.

2. The method of the preceding claim, wherein the steps of applying a covering on a surface of the tile, of dispensing fragments of abrasive material on the surface of the tile, of removing the covering from the surface of the tile, are carried out between the step of drying the tile and the step of firing the tile.

3. The method of any one of the preceding claims, wherein the step of dispensing fragments of abrasive material on the surface of the tile comprises a step of dispensing ceramic fragments.

4. The method of any one of claims 1 or 2, wherein the step of dispensing, on the surface of the tile, fragments of abrasive material, comprises a step of dispensing fragments of dry ice.

5. The method of any one of claims 1 or 2, wherein the step of dispensing fragments of abrasive material on the surface of the tile comprises a step of dispensing fragments of vitreous material.

6. The method of any one of claims 1 or 2, wherein the step of dispensing fragments of abrasive material on the surface of the tile comprises a step of dispensing fragments of aluminium oxide or alumina.

7. The method of any one of the preceding claims, further comprising, following the step of removing the covering from the surface of the tile, a step of dispensing an air jet on the surface of the tile in order to remove any residues of fragments of abrasive material from the surface of the tile.

## Patentansprüche

1. Herstellungsverfahren einer strukturierten Keramikfliese, das nacheinander folgende Schritte umfasst:
- Durchführung der Formgebung einer ungebrannten Fliese ausgehend von einer geeigneten Mischung;
- Durchführung der Trocknung der geformten ungebrannten Fliese;
- Durchführung des Brennens der getrockneten Fliese;
umfassend zwischen dem Schritt des Formens der Fliese und dem Schritt des Brennens der Fliese folgende Schritte:
- Aufbringen eines Belags auf eine Oberfläche der Fliese, so dass mindestens ein Schutzbereich der Oberfläche definiert wird, der von dem Belag bedeckt wird und von außen unzugänglich ist, und mindestens ein Arbeitsbereich der Oberfläche definiert wird, der von außen zugänglich ist; und danach
- Abgabe von Fragmenten eines Schleifmaterials auf die Oberfläche der Fliese, um den Arbeitsbereich abzuschleifen; und danach
- Entfernen des Belags von der Oberfläche der Fliese;
**dadurch gekennzeichnet, dass**:
der Schritt des Aufbringens mindestens eines Belags auf die Oberfläche der Fliese im Aufbringen einer Klebstoff- oder Wachsschicht auf die Oberfläche der Fliese besteht, so dass die Klebstoff- oder Wachsschicht auf der Oberfläche haftet und anschließend entfernt werden kann, um den Schutzbereich und den Arbeitsbereich zu definieren.

2. Verfahren nach dem vorhergehenden Anspruch, bei dem die Schritte des Aufbringens eines Belags auf eine Oberfläche der Fliese, der Abgabe von Fragmenten eines Schleifmaterials auf die Oberfläche der Fliese, des Entfernens des Belags von der Oberfläche der Fliese zwischen dem Schritt des Trocknens der Fliese und dem Schritt des Brennens der Fliese durchgeführt werden.

3. Verfahren nach einem der vorstehenden Ansprüche, wobei der Schritt der Abgabe von Fragmenten aus Schleifmaterial auf die Oberfläche der Fliese einen Schritt des Auftragens von Keramikfragmenten umfasst.

4. Verfahren nach einem der Ansprüche 1 oder 2, wobei der Schritt der Abgabe von Fragmenten eines Schleifmaterials auf die Oberfläche der Fliese einen Schritt der Abgabe von Trockeneisfragmenten umfasst.

5. Verfahren nach einem der Ansprüche 1 oder 2, wobei der Schritt der Abgabe von Fragmenten aus Schleifmaterial auf die Oberfläche der Fliese einen Schritt der Abgabe von Fragmenten aus glasartigem Material umfasst.

6. Verfahren nach einem der Ansprüche 1 oder 2, wobei der Schritt der Abgabe von Fragmenten aus Schleifmaterial auf die Oberfläche der Fliese einen Schritt der Abgabe von Fragmenten aus Aluminiumoxid oder Tonerde umfasst.

7. Verfahren nach einem der vorstehenden Ansprüche, das ferner nach dem Schritt des Entfernens des Belags von der Oberfläche der Fliese einen Schritt der Abgabe eines Luftstrahls auf die Oberfläche der Fliese umfasst, um alle Rückstände von Fragmenten von Schleifmaterial von der Oberfläche der Fliese zu entfernen.

## Revendications

1. Procédé de production d'un carreau de céramique structuré, comprenant, successivement, des étapes de :
- réalisation d'une formation d'un carreau non cuit en partant d'un mélange approprié ;
- réalisation d'un séchage du carreau non cuit formé ;
- réalisation d'une cuisson du carreau séché ;
comprenant, entre l'étape de formation du carreau et l'étape de cuisson du carreau, des étapes :
- d'application d'un revêtement sur une surface du carreau de façon à ce qu'au moins une région de protection de la surface soit définie, revêtue du revêtement et inaccessible à partir de l'extérieur, et au moins une région de travail de la surface soit définie, accessible à partir de l'extérieur ; et ensuite
- de distribution, sur la surface du carreau, de fragments d'une matière abrasive, de façon à abraser la région de travail ; et ensuite
- d'enlèvement du revêtement de la surface du carreau ;
**caractérisé en ce que** :
l'étape d'application d'au moins un revêtement sur la surface du carreau consiste à appliquer une couche d'adhésif ou de cire sur la surface du carreau de façon à ce que la couche d'adhésif ou de cire adhère à la surface et puisse par la suite être enlevée, pour définir la région de protection et la région de travail.

2. Procédé selon la revendication précédente, dans lequel les étapes d'application d'un revêtement sur une surface du carreau, de distribution de fragments de matière abrasive sur la surface du carreau, d'enlèvement du revêtement de la surface du carreau, sont réalisées entre l'étape de séchage du carreau et l'étape de cuisson du carreau.

3. Procédé selon l'une quelconque des revendications précédentes, dans lequel l'étape de distribution de fragments de matière abrasive sur la surface du carreau comprend une étape de distribution de fragments de céramique.

4. Procédé selon l'une quelconque des revendications 1 ou 2, dans lequel l'étape de distribution, sur la surface du carreau, de fragments de matière abrasive, comprend une étape de distribution de fragments de glace sèche.

5. Procédé selon l'une quelconque des revendications 1 ou 2, dans lequel l'étape de distribution de fragments de matière abrasive sur la surface du carreau comprend une étape de distribution de fragments de matière vitreuse.

6. Procédé selon l'une quelconque des revendications 1 ou 2, dans lequel l'étape de distribution de fragments de matière abrasive sur la surface du carreau comprend une étape de distribution de fragments d'oxyde d'aluminium ou d'alumine.

7. Procédé selon l'une quelconque des revendications précédentes, comprenant en outre, suite à l'étape d'enlèvement du revêtement de la surface du carreau, une étape de distribution d'un jet d'air sur la surface du carreau afin d'enlever tout résidu de fragments de matière abrasive de la surface du carreau.
